# EUROPEAN PATENT APPLICATION

(11) **EP 1 313 292 A2**
(43) Date of publication of application: **21.05.2003**
(21) Application number: 02257778.7
(22) Date of filing: 11.11.2002
(51) Int. Cl.: H04L 29/06

(54) **Sending notifications through a firewall**

(30) Priority: 16.11.2001 US 991130
(71) Applicant: Docent, Inc., Mountain View, CA 94043-1622 (US)
(72) Inventor: Zellers, Mark H., Mountain View, CA 94043 (US)
(74) Representative: Brookes Batchellor

(57) **Abstract**

A method for communicating information between a public server and a private server, where the public server is unable to initiate communication with the private server. The method includes indirectly notifying, by the way of a client device, the private server to poll the public server.

## Description

The present invention relates generally to network communications, and, more particularly, to indirectly notifying a private server to poll a public server beyond a firewall between the private server and public server, where the firewall prevents the public server from directly contacting the private server.

Increasingly, information is distributed across many communication devices (combination of storage and servers) some of which reside on one side of a firewall (private or trusted) and some of which reside on another side of the firewall (public). Often a device on the public side of the firewall possesses information that is desired by a device on the private side but the device on the public side is not able to initiate communication with the private side device in order to send the information to it. Consequently, the private side device is often designed to periodically poll the public side device to discover if there is information for it. If the polling interval is small and information is often not present, processor time and communications resources are wasted. If the polling interval is large and information often has to wait a long time before it is sent, the information is not received at the private side device in a timely manner. Moreover, these solutions typically are unable to give a user immediate feedback that a private side device has received information from the public side device that is related to the user.

Another common approach is to open a hole in the firewall to allow traffic from specific public side devices to be delivered to the private side devices. This approach presents security risks, and is, thus, undesirable.

Thus, there is a need for mechanisms for communicating information between a public side device and a private side device without requiring inefficient or untimely polling, or holes in a firewall. The present invention meets this need.

### SUMMARY OF THE INVENTION

A method for communicating information between a public server and a private server, where the public server is unable to initiate communication with the private server, is described. The method includes indirectly notifying the private server to poll the public server.

### BRIEF DESCRIPTION OF THE DRAWINGS

The present invention is illustrated by way of example, and not limitation, in the figures of the accompanying drawings in which like references denote similar elements, and in which:
**FIG. 1** illustrates a communication system according to one embodiment of the present invention.
**FIG. 2** illustrates a communication system according to another embodiment of the present invention.

### DETAILED DESCRIPTION

Methods and apparatus for securely, efficiently, and timely communicating information between a public side device and a private side device are described. In the following description, for purposes of explanation, numerous specific details are set forth in order to provide a thorough understanding of the present invention. It will be evident, however, to one skilled in the art that the present invention may be practiced in a variety of networks, especially transport control protocol (TCP) and hypertext transfer protocol (HTTP) networks , without these specific details. In other instances, well-known operations, steps, functions and elements are not shown in order to avoid obscuring the invention.

Parts of the description will be presented using terminology commonly employed by those skilled in the art to convey the substance of their work to others skilled in the art, such as firewall, private server, public server, client machine or device, protocol, HTTP request and so forth. Various operations will be described as multiple discrete steps performed in turn in a manner that is most helpful in understanding the present invention. However, the order of description should not be construed as to imply that these operations are necessarily performed in the order that they are presented, or even order dependent. Lastly, repeated usage of the phrases "in one embodiment," "an alternative embodiment," or an "alternate embodiment" does not necessarily refer to the same embodiment, although it may.

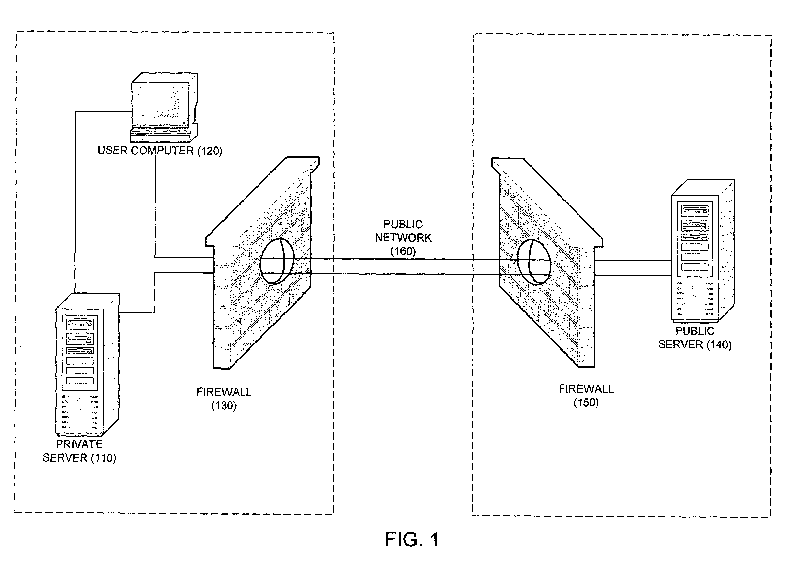

FIG. 1 illustrates a communication system according to one embodiment of the present invention. The system **100** includes a private server **110,** a client device **120** such as a user computer **120,** and a private side firewall **130** on a private side of a public network **160**. The system **100** further includes a public server **140** coupled to the public network **160.** The public server **140** may be directly coupled to the public network **160**, or, optionally, a firewall **150** may be placed between the public server **140** and the network **160**.

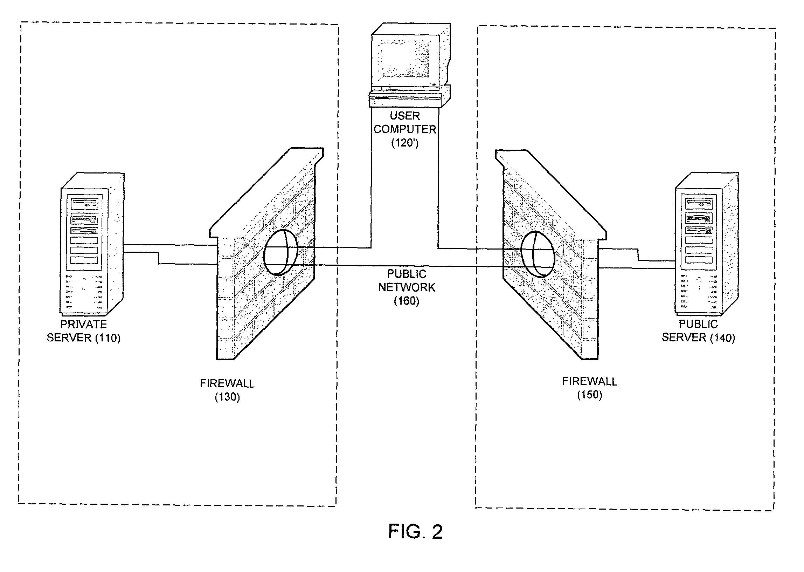

FIG. 2 illustrates a communication system according to another embodiment of the present invention. The system **200** includes the private server **110** and the private side firewall **130** on a private side of the public network **160**. The system **200** further includes a client device **120'** such as a user computer **120'** and the public server **140** coupled to the public network **160**, with or without the intermediate firewall **150**.

According to the embodiments shown in FIGS. 1 and 2, client device **120, 120'** and public server **140** communicate in accordance with HTTP, as do client device **120, 120'** and private server **110.** Private server **110** and public server **140** communicate using any protocol allowed by firewall **130.** Of course, it should be appreciated that the present invention encompasses protocols besides HTTP.

The firewalls **130, 150** allow incoming HTTP connections, although whether an incoming HTTP connection from a particular source is allowed will depend on the trust of the firewall in the source. As a firewall for a public server **140,** the firewall **150** will generally allow incoming HTTP connections. As a firewall for a private server **110**, the firewall 130 may, for example, only accept HTTP connections from trusted sources. For both embodiments shown in FIGS. 1 and 2, the firewall **130** allows private server **110** to initiate communications with public server **140**, using a set of, for example, one or more prearranged Transmission Control Protocol (TCP) ports. The firewall **130**, however, does not allow public server **140** to initiate communications with private server **110**. According to the embodiment shown in FIG. 1, client device **120** is located behind the firewall **130** and thus has direct access to private server **110**. In the embodiment shown in FIG. 2, the client device **120'** is located outside of the private side firewall **130** and is authorized to communicate with the private server **110** because the firewall **130** permits client device **120'** access to, for example, TCP port 80 (HTTP) of the firewall **130.**

According to both embodiments, client device **120, 120'** submits an HTTP request to public server **140** via public network **160** that causes public server **140** to generate results that the public server **140** is being directed to report to private server **110.** When public server **140** responds to the HTTP request of client device **120, 120',** public server **140** returns an HTTP redirect message that directs client device **120, 120'** to fetch a page, such as a World Wide Web page, from the private server **110.** Based on the redirect message, client device **120, 120'** generates an HTTP request and sends the HTTP request to private server **110.** Based on the HTTP request received from client device **120, 120',** private server **110** becomes aware that results are available at public server **140.** If there is no content associated with the HTTP request and the display on client device **120, 120'** is to remain unchanged, private server **110** responds immediately to client device **120, 120'** with an HTTP No Content response. Since private server **110** is on the private or trusted side of the firewall **130**, the private server **110** is permitted to initiate a connection with public server **140** to retrieve the results. The private server **110** preferably requests the information from the public server **140**. The request for information can be thought of as a poll to public server **140** that is virtually guaranteed to be successful because of the prior notification received from client device **120, 120'** that public server **140** has information to report. If private server **110** is to give client device **120, 120'** positive feedback that the results have been transferred, the private server **110** can send to client device **120, 120'** a suitable hypertext markup language page which may be based on the results.

Thus, methods and apparatus for securely, efficiently, and timely communicating information between a public side device and a private side device are described. Although the present invention has been described with reference to specific exemplary embodiments such as those illustrated in FIGS 1 and 2, it will be evident to one of ordinary skill in the art that various modifications and changes may be made to these embodiments without departing from the scope of the invention as set forth in the claims. Accordingly, the specification and drawings are to be regarded in an illustrative rather than a restrictive sense.

## Claims

1. A method for communicating information between a public server and a private server, wherein the public server is unable to initiate communication with the private server, and a communication device is able to communicate with the public server and the private server, the method comprising:
indirectly notifying, by way of the communications device, the private server to request the information from the public server.

2. The method of claim 1, wherein notifying includes sending a first indication of availability of the information at the public server from the public server to the communication device.

3. The method of claim 2, further comprising, based on the receipt of the first indication from the public server, sending from the communication device to the private server a second indication indicative of the existence of the information at the public server.

4. The method of claim 3, further comprising the private server requesting the information from the public server to retrieve the information.

5. The method of claim 1, further comprising the private server requesting the information from the public server to retrieve the information.

6. The method of claim 5, further comprising sending from the private server to the communication device data based upon the information.

7. The method of claim 1, further comprising, prior to the indirectly notifying, sending a request from the communication device to the public server causing the information that needs to be reported to the private server to be generated.

8. The method of claim 1, wherein indirectly notifying includes sending an HTTP redirect message from the public server to the communication device.

9. The method of claim 8, wherein indirectly notifying includes sending an HTTP request from the communication device to the private server to notify the private server that the information is available.

10. A method for communicating information between a public server and a private server, wherein the public server is unable to initiate communication with the private server, the method comprising:
indirectly notifying the private server to request the information from the public server by sending a first indication of existence of the information from the public server to a communication device that is able to communicate with the private server; and
based on the receipt of the first indication from the public server, sending from the communication device to the private server a second indication indicative of the existence of the information at the public server.

11. A method for facilitating a private server's requesting information from a public server, wherein the public server is unable to initiate communication with the private server, the method comprising:
based upon receipt of a first indication indicative of availability of the information at the public server, generating at a communication device a second indication of availability of the information; and
sending the second indication of availability to the private server.

12. A computer readable storage medium having thereon instructions which when executed result in the following steps being performed:
accepting at a private server from a communication device a first indication indicative of availability of information at the public server that is unable to initiate communication with the private server; and
requesting the information from the public server based on the acceptance of the first indication.

13. A system for communicating information between a public server and a private server, wherein the public server is unable to initiate communication with the private server, the system comprising:
a communication device that is to receive from the public server a first indication of availability of information at the public server; and
a first private server that is to receive a second indication of availability of information, based on the first indication, from the communication device and that is to request the information from the public server in response to receipt of the second indication.
